# EUROPEAN PATENT APPLICATION

(11) **EP 4 685 049 A1**
(43) Date of publication of application: **28.01.2026**
(21) Application number: 23927854.2
(22) Date of filing: 20.03.2023
(51) Int. Cl.: B64C 25/16, B64C 25/02, B64C 25/00

(54) **LANDING GEAR FAIRING SYSTEM AND LANDING GEAR COMPONENT ASSEMBLY METHOD**

(71) Applicant: Alves Barreto Lunardelli, Antonio, 05688-040 São Paulo (BR)
(72) Inventor: Alves Barreto Lunardelli, Antonio, 05688-040 São Paulo (BR)
(74) Representative: Marks & Clerk LLP
(86) International application number: PCT/BR2023/050093
(87) International publication number: WO 2024/192486

(57) **Abstract**

The present invention refers to a landing gear fairing system comprising an annular wall comprising fastening means, a first and a second split coupling elements, and a first and second connecting members, and a method of assembling parts for landing gear. With the use of the invention, it is possible to install the parts in landing gears without the need to remove the wheels, facilitating access to the other components of the landing gears and reducing costs and time required for maintenance.

## Description

### Summary of the Invention

The present invention refers to an aircraft landing gear fairing system, and a method of assembling the landing gear fairing system.

### Background of the Invention

The objective of the aircraft landing gear fairing system, such as the one that is the subject of industrial design registration N°. BR 30 2017 003006 8, is to reduce the aerodynamic drag verified in the substantial majority of aircraft undercarriages and, as a consequence, reduce losses and noise generated during landings and takeoffs.

The reduction of drag by less turbulence, that is, less shear of molecules through the adhesion of the fluid with the formation of opposing vortices in the upper rear part of the fairing in combination with the landing gear, allows for energy conservation, which can bring economic gain, whether by saving fossil fuels, hydrogen or even for electric aircraft, with the use of appropriate materials that allow a gain in overall operational efficiency. Suitable materials are understood to be those with satisfactory properties of broad technical aspects for the certification processes in government agencies, such as mechanical and thermal stresses, fatigue, corrosion and whose total additional weight is with the least possible impact, to the exclusion of all others.

One of the problems noted in relation to the structure of the fairing system as originally proposed and illustrated in the aforementioned design registration is that its installation in landing gears requires the removal of a substantial part of the landing gear parts, in addition to the lack of adequate fastening means, making the process more time-consuming and costly, or even impossible to be carried out.

Therefore, although the use of the aforementioned fairing system for aircraft landing gears is very advantageous for the reasons stated above, there is a need for a method of assembling this system that avoids the need to remove a plurality of parts, consuming time and resources.

### Objectives of the Invention

One of the main advantages of this invention is the possibility of installing parts in landing gears without the need to remove the wheels, facilitating access to the other components of the landing gears and reducing costs and time required for maintenance.

Another relevant advantage of this invention is the reduction of installation costs, manufacturing costs and reduction of the total final weight added to the aircraft after installation of the parts in the landing gear.

Another relevant advantage of the use of the invention is the reduction of aerodynamic drag and, as a consequence, reduction of losses and noise generated in landings and takeoffs.

The invention also has as an additional feature of the reduction of manufacturing costs for its production in scale, in view of an advantageous arrangement that requires few steps for the manufacture of components.

The objectives described above are achieved through the use of a fairing system comprising: an annular wall comprising fastening means, at least one split coupling element, and at least one connecting member.

### Description of the Drawings

Figure 1 shows a frontal view of a conventional landing gear of the prior art;
Figure 2 shows a landing gear and a fairing system as a preferred embodiment of the present invention, in an exploded perspective view;
Figures 3 to 6 show the assembly stages of the landing gear fairing system according to a preferred embodiment of the present invention from the fully disassembled condition (figure 3) to the fully assembled condition (figure 6), in a perspective view;
Figure 7 shows a landing gear with the landing gear fairing system as a preferred embodiment of the present invention, in a perspective view;
Figure 8 shows a landing gear with the landing gear fairing system as a preferred embodiment of the present invention, in a perspective view;

### Detailed Description of the Invention

The invention will now be described in greater detail, drawing reference to the figures listed above.

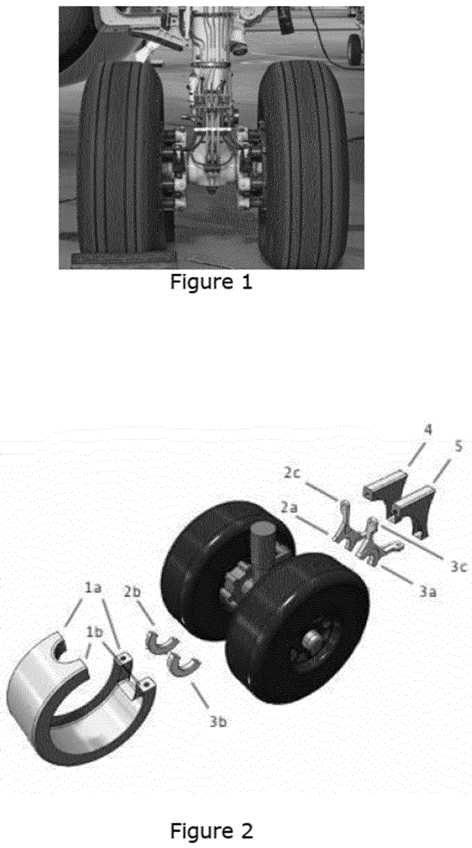

Figure 1 shows a conventional landing gear, where it can be seen that they are made up of several parts that must be removed to carry out maintenance and assembly procedures, including the wheel and tire assemblies. Particularly, this arrangement of the landing gear provides the formation of the so-called aerodynamic drag when the landing gear is activated, a condition that is verified in the substantial majority of aircraft currently in operation, resulting in higher fuel consumption as well as a considerable generation of noise at the time of landings and takeoffs.

Figure 2 shows the landing gear fairing system according to a preferred embodiment of the invention, and the way it should be assembled on the landing gear.

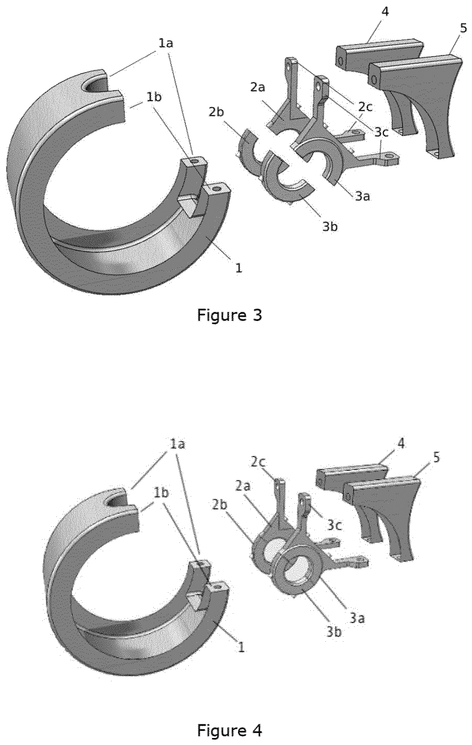

Figures 3 to 6 show the stages of the process of assembling the landing gear fairing system according to a preferred embodiment of the invention. As can be seen, the invention's fairing system is made up of few parts, facilitating manufacturing, assembly and maintenance.

As illustrated, the assembly process of the fairing system is carried out from the innermost part to the outermost part of the system. The innermost part is formed by at least one coupling element (2, 3) split into an upper (2a, 3a) and lower (2b, 3b) portion, when coupled, the upper and lower portions surround the landing gear axis, as shown in figures 3 and 4.

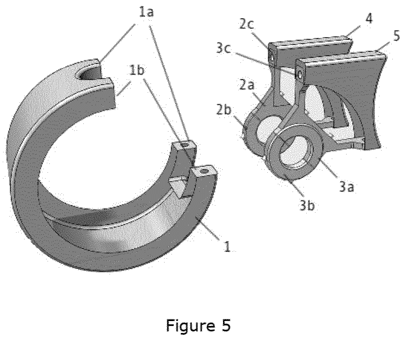

Next, the at least one coupling element (2, 3) that surrounds the landing gear shaft is appropriately secured by means of fastening projections (2c, 3c) to at least one connecting member (4, 5), which is arranged at the rear of the fairing system, as illustrated in Figure 5.

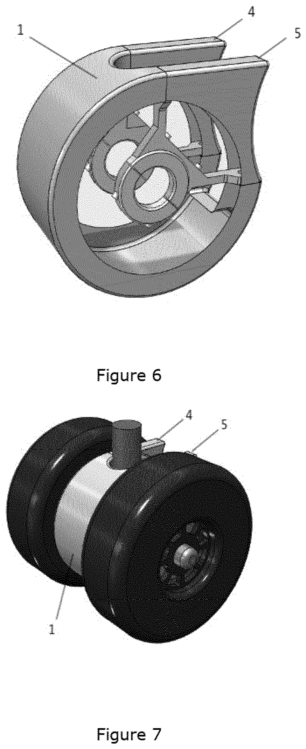

Finally, in Figure 6, the fairing system is shown already in the fully assembled condition, in which an annular housing (1) is opened in a section of approximately a quarter of the circle. The annular housing (1) comprises fastening means (1a, 1b) at the open ends, which connect with the at least one coupling element (2, 3) and with the at least one connecting member (4, 5).

Optionally, the fairing system of the invention comprises two or more split coupling elements (2, 3).

Optionally, the fairing system of the invention comprises two or more connecting members (4, 5).

The couplings and connections used may include any forms of couplings, connections, fastenings. Examples include but are not limited to: bolts, nuts, studs, rivets, adhesives, welds, and fittings.

As will be readily observed by a person skilled in the art, there is the possibility of the assembly being done with a different sequence of steps, without straying from the scope of the present invention.

For example, a person skilled in the art reading this disclosure could optionally start from the first configuration shown in Figure 3 and attach the fastening projection (2c) of the first coupling element to the first connecting member (4) and the fastening projection (3c) of the second coupling element to the second connecting member (5), and then connect the upper portion (2a) to the lower portion (2b) of the first coupling element (2), and the upper portion (3a) to the lower portion (3b) of the second coupling element (3).

Figures 3 to 5 also allow a detailed visualization of the preferred shape of the fairing system, more precisely the shape of the annular housing (1) being adapted to receive a first and a second coupling elements (2, 3), and the fixing means (1a, 1b), at the tips of the annular housing (1), which allow the connection with the fastening projections (2c, 3c) and to a first and a second connecting members (4, 5).

The fastening means (1a, 1b), the fastening projections (2c, 3c) and the first and second connecting members (4, 5) in the figures have been illustrated as being/comprising holes to connect the annular housing (1), the first and second coupling elements (2, 3) and the first and second connecting members (4, 5). However, any other forms of connecting and/or coupling may be used.

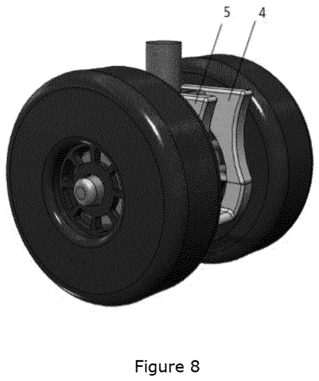

Figures 7 and 8 show the coupling system according to a preferred embodiment of the invention fully installed in a landing gear.

It should be understood that the embodiments described above are for illustrative purposes only, and that various modifications can be made without departing from the scope of the invention, which is defined by the accompanying claims.

## Claims

1. A landing gear fairing system **characterized by** comprising:
an annular housing (1) comprising fastening means (1a, 1b) at its circumferential ends;
at least one split coupling element (2, 3), comprising an upper portion (2a, 3a), a lower portion (2b, 3b) and two fastening projections (2c, 3c);
at least one connecting member (4, 5);
in which:
the fastening means (1a, 1b) of the annular housing (1) are connectable to the fastening projections (2c, 3c), and to at least one connecting member (4, 5); and
the at least one coupling element (2, 3) is attachable to a landing gear shaft (A) between their respective upper (2a, 3a) and lower (2b, 3b) portions.

2. The fairing system according to claim 1, **characterized by** comprising two bipartite coupling elements (2, 3).

3. The fairing system according to either claim 1 or 2, **characterized by** comprising two connecting members (4, 5).

4. The assembly method of the fairing system for landing gear as defined in any of claims 1 to 3, **characterized by** comprising the steps of:
(a) positioning the fairing system on the landing gear shaft (A) so that the landing gear shaft is positioned between the respective upper (2a, 3a) and lower (2b, 3b) portions of the at least one coupling element (2, 3); and
b) connecting the fastening means (1a, 1b) of the annular housing (1) to the fastening projections (2c, 3c), and to the at least one connecting member (4, 5).

5. The assembly method according to claim 4, **characterized by** comprising the step of connecting the at least one connecting member (4, 5) to the fastening projections (2c, 3c) before step a).

6. The assembly method according to any of claims 1 to 5, **characterized in that** at least one connection is made with one of: a bolt, nut, stud, rivet, adhesive, weld, and fitting.
